# EUROPEAN PATENT APPLICATION

(11) **EP 4 733 872 A1**
(43) Date of publication of application: **29.04.2026**
(21) Application number: 24208701.3
(22) Date of filing: 24.10.2024
(51) Int. Cl.: G05B 23/02, B04B 13/00

(54) **CONTROLLING SEPARATOR MAINTENANCE**

(71) Applicant: Alfa Laval Corporate AB, 221 00 Lund (SE)
(72) Inventor: HILDING, Klas, SE-138 39 ÄLTA (SE)
(74) Representative: Alfa Laval Attorneys

(57) **Abstract**

The present disclosure relates to a method of providing for maintenance of a separator (1), and a separator (1) performing the method. The method comprises determining (S101) operational modes in which the separator (1) is controlled to operate upon performing separation processes, storing (S102) information as to which operational modes are performed by the separator, evaluating (S103) the stored information for scheduling a maintenance action to be performed on the separator (1) based on the performed operational modes, and alerting (S104) an operator (41) of the separator (1) of the scheduled maintenance action to be performed on the separator (1).

## Description

### TECHNICAL FIELD

The present disclosure relates to a method of providing for maintenance of a separator, and a separator performing the method.

### BACKGROUND

Centrifugal separators are generally used for separation of liquids and/or for separation of solids from a liquid mixture. During operation, liquid mixture to be separated in a separation process is introduced into a rotating centrifuge bowl and e.g. heavy particles or denser liquid accumulate at the periphery of the rotating bowl whereas less dense liquid accumulates closer to the central axis of rotation. This allows for collection of the separated fractions, e.g. by means of different outlets arranged at different distances from the rotational axis.

However, maintenance of the separators is an important action to be taken. For a prior art separator, maintenance is typically scheduled at fixed intervals for servicing the separator, which results in inflexible maintenance scheduling.

### SUMMARY

One objective is to solve, or at least mitigate, this problem in the art and thus to provide an improved method of providing for maintenance of a separator.

This objective is attained in a first aspect by a method of providing for maintenance of a separator. The method comprises determining operational modes in which the separator is controlled to operate upon performing separation processes, storing information as to which operational modes are performed by the separator, evaluating the stored information for scheduling a maintenance action to be performed on the separator based on the performed operational modes, and alerting an operator of the separator of the scheduled maintenance action to be performed on the separator.

This objective is attained in a second aspect by a separator configured to perform a separation process. The separator comprises a processing unit being configured to provide for maintenance of the separator, and control the separator to be operative to determine operational modes in which the separator is controlled to operate upon performing separation processes, store information as to which operational modes are performed by the separator, evaluate the stored information for scheduling a maintenance action to be performed on the separator based on the performed operational modes, and to alert an operator of the separator of the scheduled maintenance action to be performed on the separator.

Advantageously, depending on which operational modes are performed over time by the separator, different maintenance programs will advantageously be scheduled. Thus, maintenance of the separator becomes far more flexible as compared to the fixed-scheduling maintenance actions utilized in the art, since the various operations performed by the operator over time are taken into account upon scheduling the maintenance action(s).

An "operational mode" may be influenced both by internal factors, such as how the separator is operated, and/or by external factors, such as in which environment - in terms of e.g. temperature and humidity - the separation process is performed. Thus, a determined operational mode related to increased wear (high operational speed, harsh environment etc) may lead to another scheduling of a maintenance action compared to a determined operational mode related to less wear (low rotational speed, stand by operation, no harsh environment etc). Another scheduling of a maintenance action may be a different type of maintenance action or an increased or decreased time until the maintenance action is performed.

In an embodiment, the maintenance action is selected from an inspection of one or several separator components, a replacement of one or several separator components, and/or cleaning of one or several separator components (while the separator is not in operation). A separator components may for example be a polymeric component or a bearing.

In an embodiment, the alerting causes the operator to perform the maintenance action according to a scheduled timing of the maintenance action.

In an embodiment, the scheduled maintenance action is different for different operational modes being performed by the separator.

In an embodiment, the different maintenance actions indicate different components of the separator to be serviced upon performing the maintenance on the separator.

In an embodiment, the scheduled maintenance action comprises instructions to the operator on how to perform the maintenance.

In an embodiment, the maintenance action is scheduled with different intervals for different operational modes being performed by the separator.

In an embodiment, the operational modes are categorized as one or more of a low-maintenance mode, a medium-maintenance mode and a high-maintenance mode, each representing a degree of maintenance being required for the separator.

In an embodiment, the operational mode being determined based on operational parameters of the separator being controlled upon performing separation processes and/or properties of a fluid mixture being supplied to the separator for separation and/or the external environment in which the separator is arranged.

In a third aspect, a computer program is provided comprising computer-executable instructions for causing a separator to perform steps recited in the method of the first aspect when the computer-executable instructions are executed on a processing unit included in the separator.

In a fourth aspect, a computer program product is provided comprising a computer readable medium, the computer readable medium having the computer program according to the third aspect embodied thereon.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Figure 1 shows a cross-sectional view of a prior art centrifugal separator in which embodiments may be implemented;
Figure 2 shows a more detailed view of a centrifuge bowl of the centrifugal separator of Figure 1;
Figure 3 shows a schematic illustration of a controller configured to control a separator in an embodiment;
Figure 4 shows a flowchart illustrating a method of providing for maintenance of a separator in an embodiment; and
Figure 5 illustrates a separator according to an embodiment.

### DETAILED DESCRIPTION

The aspects of the present disclosure will now be described more fully hereinafter with reference to the accompanying drawings, in which certain embodiments of the invention are shown.

These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

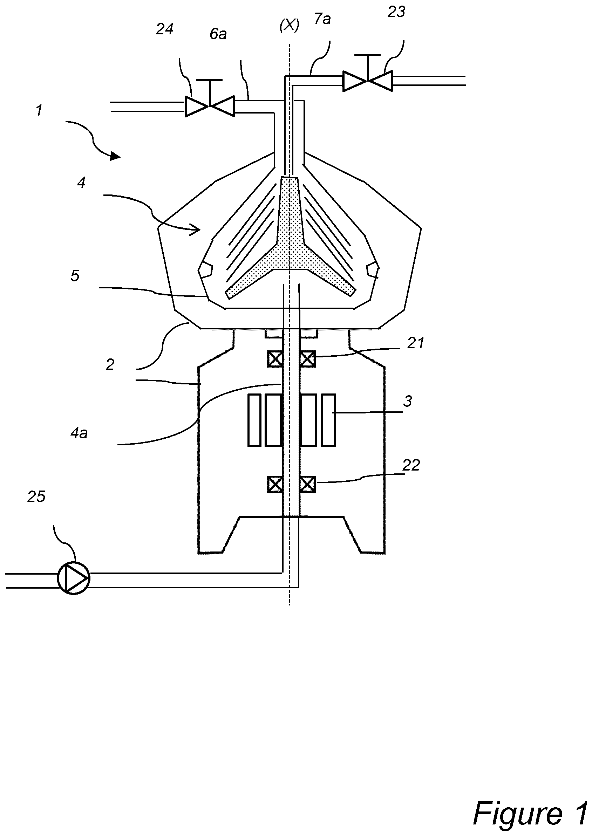

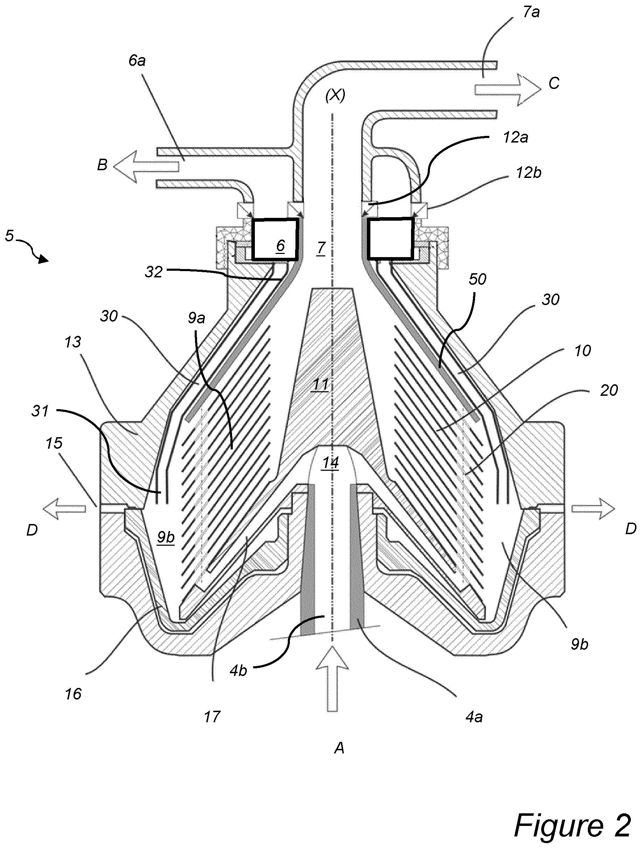

Figures 1 and 2 illustrates a separator 10 to which a control scheme may be applied in an embodiment. As is understood, the control scheme according to embodiments described herein may be applied to any appropriate separator type, such as such as a clarifier, which is a centrifugal separator for solid - liquid separation, a purifier, which is a centrifugal separator for liquid - liquid - solid separation, and a concentrator, which is a centrifugal separator designed to separate three different phases, one solid phase and two liquid phases of different densities, and clean the densest/heaviest liquid phase.

Figure 1 shows a cross-section of an embodiment of a centrifugal separator 1 configured to separate a heavy phase and a light phase from a liquid mixture. The centrifugal separator 1 has a rotatable part 4, comprising the centrifuge bowl 5 and drive spindle 4a. As is understood, this is just one example of a separator in which embodiments can be implemented.

The centrifugal separator 1 is further provided with a drive motor 3. This motor 3 may for example comprise a stationary element and a rotatable element, which rotatable element surrounds and is connected to the spindle 4a such that it transmits driving torque to the spindle 4a and hence to the centrifuge bowl 5 during operation. The drive motor 3 may be an electric motor. Alternatively, the drive motor 3 may be connected to the spindle 4a by transmission means such as a drive belt or the like, and the drive motor may alternatively be connected directly to the spindle 4a.

The centrifuge bowl 5, shown in more detail in Figure 2, is supported by the spindle 4a, which is rotatably arranged in stationary frame 2 around the vertical axis of rotation (X) in a bottom bearing 22 and a top bearing 21. The stationary frame 2 has an upper hood that surrounds centrifuge bowl 5.

In the centrifugal separator as shown in Figure 1, liquid mixture to be separated is fed to the bottom to the centrifuge bowl 5 by means of inlet feed pump 25 via the drive spindle 4a. The drive spindle 4a is thus in this embodiment a hollow spindle, through which the feed is supplied to the centrifuge bowl 5. However, in other embodiments, the liquid mixture to be separated is supplied from the top, such as through a stationary inlet pipe extending into the centrifuge bowl 5. The pump 25 may be utilized in order to control flowrate of the fluid mixture being input to the separator 1, which thus affects the separator throughput for the supplied fluid mixture.

After separation has taken place within the centrifuge bowl 5, separated liquid heavy phase is discharged through stationary outlet pipe 6a, whereas separated liquid light phase is discharged through stationary outlet pipe 7a. Valve 23 may be used to control the counter pressure in stationary outlet pipe 7a and valve 24 may be used to control the counter pressure in stationary outlet pipe outlet pipe 6a. These counter pressures may be used to regulate the radial level of the interface between the liquid heavy phase and the liquid light phase within the centrifuge bowl 4.

Figure 2 shows a more detailed view of the centrifuge bowl 5 of the centrifugal separator 1.

The centrifuge bowl 5 forms within itself a separation space 9a and a sludge space 9b, located radially outside the separation space 9a. In the separation space 9a, a stack 10 of separation discs is arranged coaxially around the axis of rotation (X) and axially below a top disc 50. The stack 10 is arranged to rotate together with the centrifuge bowl 5 and provides for an efficient separation of the liquid mixture into at least a liquid light phase and a liquid heavy phase. Thus, in the separation space 9a, the centrifugal separation of the liquid mixture takes place during operation. The sludge space 9b is in this embodiment confined between an inner surface of the centrifuge bowl wall 13 and an axially movable operating slide 16.

The disc stack 10 is supported at its axially lowermost portion by distributor 11. The distributor is arranged to conduct liquid mixture from the centre inlet 14 of the centrifuge bowl 5 to a predetermined radial level in the separation space 9a.

The inlet 14 is arranged for receiving the liquid mixture and is designed as a central inlet chamber formed within or under the distributor 11. The inlet 14 communicates with the separation space 9a via passages 17 formed in the distributor 11.

A number of outlet conduits 30 in the form of channels or pipes are configured to transport separated liquid heavy phase from the sludge space 9b to the second outlet 6. Such liquid heavy phase may comprise some solids as well. In Figure 2, the outlet conduits 30 are formed as pipes having their inlet end portions 31 stretching out in the sludge space 9b to a diameter larger than the disc stack diameter. The outlet conduits 30 have their inlet end portions 31 extending into the sludge space 9b. The outlet conduits 30 extend from a radially outer position of the sludge space 9b to the second outlet 6. The outlet conduits 30 consequently have their inlet end portions 31 arranged at the radially outer position and a conduit outlet 32 arranged at a radially inner position. The outlet conduits are arranged axially above the top disc 50 and in close proximity of the surrounding upper inner wall of the centrifuge bowl 5. Further, the outlet conduits 30 are arranged with an upward tilt relative the radial plane from the inlet end portions 31 to the conduit outlet 32.

In embodiments, the centrifuge bowl 5 comprises at least four outlet conduits 30. However, the centrifuge bowl 5 may comprises a single outlet conduit. In other embodiments, the centrifuge bowl is free of outlet conduits 30, and separated liquid heavy phase may flow more freely above the top disc 50 to the second outlet chamber 6.

The radially inner portion of the disc stack 10 communicates with a first outlet 7 for a separated light phase of the liquid mixture. This first outlet 7 of the centrifuge bowl 5 communicates with a stationary outlet pipe 7a for discharging the separated liquid light phase from the centrifuge bowl 5.

The first and second outlet chambers 6, 7 are mechanically sealed with seals 12a, 12b. As this is an airtight design, the seals are commonly referred to as hermetic seals. The inlet channel 4b is also sealed at lower end of the hollow spindle 4a, thus preventing communication between the inlet channel 4b and the surroundings. This mechanical seal is not shown in the Figures.

In this example, the centrifuge bowl 5 is further provided with outlets 15 at the radially outer periphery of the sludge space 9b. These outlets 15 are evenly distributed around the rotor axis (X) and are arranged for intermittent discharge of a sludge component of the liquid mixture. The opening of the outlets 15 is controlled by means of an operating slide 16 actuated by operating water channels below the operating slide 16, as is known in the art. In its position shown in the drawing, the operating slide 16 abuts sealingly at its periphery against the upper part of the centrifuge bowl 5, thereby closing the sludge space 9b from connection with outlets 15, which are extending through the centrifuge bowl 5.

During operation of the separator as shown in Figure 1 and 2, the centrifuge bowl 5 is brought into rotation by the drive motor 3. Via the spindle 4a, liquid mixture to be separated is brought into the separation space 9a, as indicated by arrow "A". Depending on the density, different phases in the liquid mixture is separated between the separation discs of the stack 10. Heavier component, such as a liquid heavy phase and a sludge phase, move radially outwards between the separation discs of the stack 10 to the sludge space 9b, whereas the phase of lowest density, such as a liquid light phase, moves radially inwards between the separation discs of the stack 10 and is forced through the outlet pipe 7a via the first outlet 7, as indicated by arrow "C". The liquid of higher density is instead discharged via the outlet conduits 30 to the second outlet 6 and further out via stationary outlet pipe 6a, as indicated by arrow "B". Solids, or sludge, which accumulate at the periphery of the sludge space 9b and is emptied intermittently from within the centrifuge bowl by the sludge outlets 15 being opened, whereupon sludge is discharged from the separation chamber 15 by means of centrifugal force, as indicated by arrow "D". However, the discharge of sludge may also take place continuously, in which case the sludge outlets 15 take the form of open nozzles and a certain flow of sludge and/or heavy phase is discharged continuously by means of centrifugal force.

A separator such as that illustrated in Figures 1 and 2 generally needs to be scheduled for maintenance every now and then, such as every 2000, 4000, 6000, 8000 hours, etc., of operation or at certain calendar hours (such as every 6 months etc). Such maintenance may in general be categorized into inspection of separator components, replacing separator components and/or cleaning separator components (during standstill, i.e. no CIP cleaning). The maintenance may thus range from simply cleaning the separator to changing gaskets or tightening separator bolts, or changing parts of the rotatable portion of the separator 1, such as replacing bearings and/or parts of the bowl, e.g. separation discs, etc.

These maintenance intervals are fixed, say every 4000 h of operation, which provides for a rather inflexible separator maintenance schedule.

Now, in an embodiment, the maintenance to be performed on the separator 1 will be scheduled based on different operational modes in which the separator 1 is controlled to operate, which operational modes typically indicates a degree of wear that the operator 1 is subjected to depending on operational parameters of the separator 1.

In an example, the operational modes are broadly categorized into two modes; "high-maintenance mode" and "low-maintenance mode", where generally if the separator 1 over time is operated in a high-maintenance mode, the separator must be subjected to maintenance more often than if the separator 1 over time is operated in a low-maintenance mode. As is understood, this categorization could be fine-tuned where one or more further categories are introduced, such as a "medium-maintenance mode".

For instance, in case the temperature of the fluid mixture being supplied to the separator 1 via the inlet pipe 4a is high, then the degree of wear that the separator 1 is subjected to is generally higher as compared to a scenario where a low-temperature fluid mixture is supplied.

In another example, if the fluid mixture supplied to the separator 1 via the inlet pipe 4a contains a great amount of solid material, then again the general wear on the separator 1 will be higher as compared to a scenario where the fluid mixture being supplied contains a low amount of solids. This may be determined by evaluating the amount of solids being discharged from the separator 1 via the sludge outlets 15.

In a further example, if the separator 1 is in standby mode during long periods, where the centrifuge bowl 5 is operated at a low rotational speed or even is at standstill since no (or just a low amount of) fluid mixture is supplied to the separator 1 via the inlet pipe 4a, then there is typically no need to perform maintenance on the separator 1, or at least any maintenance actions can typically be sparsely scheduled.

In a further example, the number of solid discharges is monitored. With a large number of discharges, such as a number of discharges above a certain threshold number, the general wear on the separator 1 is higher as compared to a scenario where the number of discharges is lower, such as a number of discharges below the threshold number. Thus, the "high-maintenance mode" may be a mode in which the number of discharges is above a certain number and a "low-maintenance mode" may be a mode in which the number of discharges is below a certain number.

In other words, depending on e.g. specific operational parameters of the separator 1 or properties of the fluid mixture being supplied, the operational mode in which the separator 1 is controlled will be determined. For instance, with reference to one of the examples given hereinabove, in case the fluid mixture property is represented by "fluid mixture temperature", it may be necessary to determine whether or not the temperature is regarded to be low from a maintenance perspective (such as below a first temperature threshold value T1) or high (such as exceeding a second, higher temperature threshold value T2). If the temperature is considered to be high, then the operational mode in which the separator is controlled is categorized as a "high-maintenance mode". In contrast, if the temperature is considered to be low, then the operational mode in which the separator is controlled is categorized as a "low-maintenance mode". Should the temperature be between the two threshold values, the operational mode may be categorized as a "medium-maintenance mode".

Now, in the above given example where three different temperatures are envisaged for the fluid mixture (commonly referred to as "feed") being supplied to the separator, the separator 1 will be controlled to operate in one of three different operational modes, i.e. a low-maintenance mode for a low feed temperature, a medium-maintenance mode for a medium feed temperature or a high maintenance mode for a high feed temperature, which may call for different maintenance actions to be performed and/or different maintenance intervals to be selected.

In an embodiment, depending on which operational modes being performed over time by the separator 1, different maintenance programs will advantageously be scheduled.

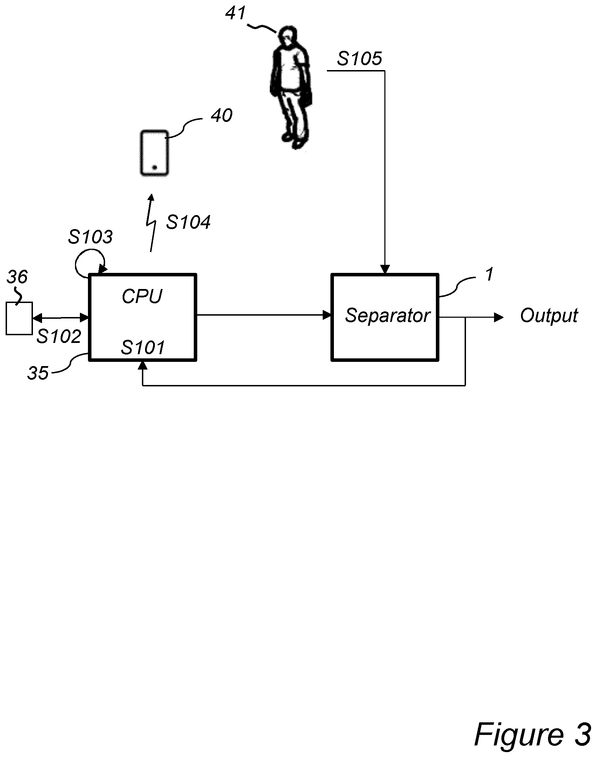

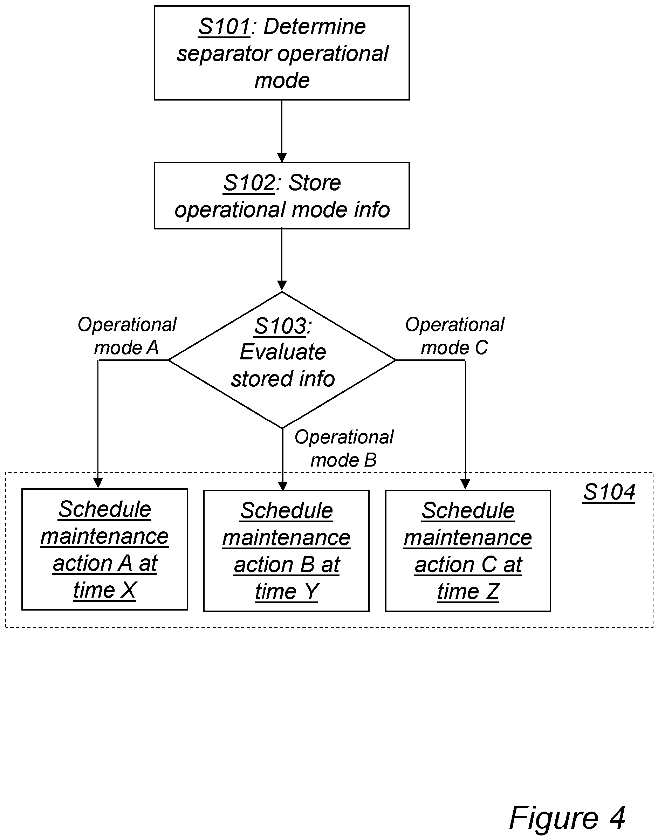

Reference will be made to Figure 3 illustrating a controller 35 configured to control the separator 1 according to an embodiment, and further to a flowchart of Figure 4 illustrating a method performed by the controller 35 in an embodiment.

As is understood, this controller 35 may be a stand-alone entity arranged remotely from - but in communicative connection with - the separator 1, but may alternatively be embedded in the separator 1 for separator control. In Figure 4, the controller 35 is referred to as a central processing unit (CPU) and may be embodied in the form of one or more microprocessors. The communicative connection of the controller 35 with the separator 1 may be wired or wireless.

Hence, the controller 35 controls operation of the separator 1 by controlling operational parameters of the separator 1 upon performing a separation process (e.g. "low turbidity", "high throughput", "low energy consumption", etc.) in step S101. For instance, depending on a desired output of the separator, the controller 35 controls operational parameters such as speed of the rotational bowl 5 or the amount of feed being supplied via the inlet pump 25.

In step S101, the controller 35 will conclude from one or more operational parameters and/or from one or more properties of the fluid mixture being supplied to the separator 1, which operational mode is performed by the separator 1. In the above given example where the temperature of the supplied fluid mixture is taken into account, the controller 35 may e.g. determine that the temperature exceeds the second threshold value T2, which indicates that the separator operates in a high-maintenance mode.

The controller 35 will in S102 store information in memory 36 as to which operational modes are performed by the separator. It may further be envisaged that information related to operational parameters of the separator 1 (e.g. rotational speed of the bowl, throughput rate, energy consumption, number of solid discharges etc.) and/or to properties of the fluid mixture (temperature, amount of solids, viscosity, etc.) is stored. As is understood, the operational modes may change over time; i.e. during a first time period, "high-maintenance mode" is performed while for a following time period the separator 1 operates in "medium-maintenance mode" and during yet another time period "low-maintenance mode" is performed. The controller 35 will store this information in S102. While the storage is illustrated in the form of a local memory 36 of the controller 35, it may be envisaged that the information e.g. is stored in a remotely located server (not shown) or the like, to which other devices may have access.

In S103, which may be performed after some time has passed e.g. to conclude which operational mode is dominating (if any), the controller 35 evaluates the stored information to determine a maintenance action to be scheduled.

Thus, the controller 35 being configured to control operation of the separator 1 in S101 will store information in S102 as to which operational modes are performed by the separator over time and in S103 evaluate the stored information in order to determine which maintenance action(s) is to be performed at which time.

For instance, in case the feed temperature exceeds T2, the separator is considered to operate in "high-maintenance mode", requiring e.g. change of gaskets and tightening of bolts within a set time period. Thus, maintenance of the pump may need to be scheduled sooner than the exemplified general maintenance program being scheduled every 4000 h. In this example, the controller 35 may conclude S103 from the operational mode information stored in S102 that this particular mode frequently is performed and that maintenance of components (in this case gaskets and bolts) should be performed within, say, 2000 h, and may as a result alert an operator of the separator 1 accordingly in S104 via an operator interface: "Gaskets, Bolts, 2000 h" (i.e. "Maintenance action A at time X"). As is understood, the controller 35 will perform a countdown of the maintenance figure of 2000 h as the time for maintenance approaches. Hence, after another 500 h have passed, another alert maybe proved ion S104 indicating "Gaskets, Bolts, 1500 h".

In a further example; if the feed temperature is below T2 but above T1, the separator is considered to operate in "medium-maintenance mode", e.g. requiring change of gaskets within another set time period but no tightening of bolts. In this example, the controller 35 may conclude S103 from the operational mode information stored in S102 that this particular medium-maintenance requires changing gaskets more seldom (and no bolt tightening), such as every 4000 h, and may as a result alert S104 an operator of the separator 1 accordingly via an operator interface: "Gaskets, 4000 h" (i.e. "Maintenance action B at time Y").

Finally, if the feed temperature is below T1, the separator is considered in S103 to operate in "low-maintenance mode", e.g. requiring no change of gaskets or tightening of bolts, but a general maintenance action such as cleaning of the bowl 5 within yet another set time period,, a general cleaning action will be scheduled (i.e. "Maintenance action C at time Z"), for instance "Bowl cleaning, 6000 h" and alerted S104 to the operator. Thus, in embodiments, the different maintenance actions indicate different components of the separator to be serviced upon performing the maintenance on the separator 1.

In a more elaborate embodiment, the controller 35 may be configured to control different operational parameters of the separator 1 depending on a desired output/performance to be achieved by the separator, which in its turn may require specific maintenance actions to be schedule based on the particular operational parameters being controlled.

For instance, in case a high separator throughput is desired for the fluid mixture being supplied to the separator 1 via the inlet pipe 4a, then the flowrate of the supplied fluid mixture typically must be high requiring the pump 25 at the inlet to operate at a high speed.

In another example, if the separated liquid being discharged through the stationary outlet pipe 7a is to be clear and thus have a low turbidity, the separator 1 will typically operate the centrifuge bowl 5 at a high rotational speed to effectively separate the two liquid phases and any solids from each other.

As is understood, in order to attain separated liquid having a low turbidity, it may further be necessary to reduce the flowrate of the fluid mixture being supplied via the inlet pipe 4a to allow the separator to thoroughly separate the liquid and the solids from the supplied fluid mixture. Hence it may be practically difficult to attain a high separator throughput and a low turbidity for the separated liquid at the same time, i.e. during one and the same operational mode of the separator 1, since different operational parameters of the separator 1 must be adjusted (in this example flowrate vs. bowl speed) for controlling a respective separation process performance parameter (i.e. throughput vs. turbidity).

In a further example, sustainability measures in the form of e.g. energy consumption and operating sound level of the separator 1 may be taken into account, which may be incompatible with both high throughput and low turbidity of the light phase. For instance, in case low-energy consumption is desired, the rotational speed of the bowl 5 is typically controlled to be low while if low light phase turbidity is desired, the rotational speed of the bowl 5 is typically controlled to be high.

In other words, a specific operational parameter of the separator 1 may be controlled by the controller 35 depending on certain functionality to be attained during the separation process.

Now, in the above given three examples where a high flowrate, low turbidity and low energy consumption/sound level, respectively, are to be achieved, different operational parameters may be adjusted in the respective case, which may call for different maintenance actions to be performed and/or different maintenance intervals to be scheduled.

In an embodiment, depending on which operational parameters are controlled by the controller 35 for attaining a certain performance/output of the separator 1, different maintenance programs will advantageously be scheduled.

Again with reference to Figure 3, in this embodiment, the controller 35 thus controls operation of the separator 1 by controlling certain operational parameters for attaining a desired performance upon the separator performing a separation process, e.g. "low turbidity", "high throughput", "low energy consumption", etc. Again, the controller 35 determines in S101 in which operational mode the separator 1 operates, which in this example is embodied by a "low turbidity mode", a "high throughput mode" and a "low energy consumption mode".

Generally, the controller 35 will conclude from a process performance parameter of the separator 1 (e.g. "turbidity", "throughput", "energy consumption", etc.) fed back from the separator 1 whether or not a target value or range is reached for the process performance parameter resulting in e.g. low turbidity or high throughput. If not, the controller 35 will adjust an operational parameter such that the target value indeed is reached. As an example, if the turbidity of the light phase is higher than a desired target range, the rotational speed of the bowl 5 is typically increased to lower the light phase turbidity, and vice versa.

The controller 35 will in S102 store information in memory 36 as to which operational modes are performed by the separator. As is understood, the operational modes may change over time; i.e. during a first time period, "low turbidity mode" is performed while for a following time period the separator 1 is controlled to operate in "high throughput mode" and during yet another time period "low energy consumption mode" is performed. The controller 35 will store this information in S102, possibly along with information associated with the controlled operational parameters.

In S103, which may be performed after some time has passed e.g. to conclude which operational mode is dominating (if any), the controller 35 evaluates the stored information to determine a maintenance action to be scheduled.

Thus, the controller 35 being configured to control operation of the separator 1 and determine an operational mode being performed in S101 will store information in S102 as to which operational modes are performed by the separator over time and in S103 evaluate the stored information in order to determine which maintenance action(s) is to be performed at which time.

For instance, in the first example given hereinabove; in case a high separator throughput is desired for the fluid mixture being supplied to the separator 1 (e.g. "Operational mode A" in Figure 4), the controller 35 concludes in S101 that the separator 1 is operated in "high throughput mode", in which mode the inlet pump 25 must be operated at a high speed. As is understood, that may over time be demanding for components of the pump 25 and maintenance of the pump may need to be scheduled sooner than the exemplified general maintenance program being scheduled every 4000 h. In this example, the controller 35 may conclude S103 from the operational mode information stored in S102 that this particular mode frequently is performed and that maintenance of components associated with the pump 25 should be performed within, say, 2000 h, and may as a result alert S104 an operator of the separator 1 accordingly in S104 via an operator interface: "Inlet pump, 2000 h" (i.e. "Maintenance action A at time X"). As is understood, the controller 35 will perform a countdown of the maintenance figure of 2000 h as the time for maintenance approaches. Hence, after another 500 h have passed, another alert may be proved ion S104 indicating "Inlet pump, 1500 h".

In the second example given hereinabove; if the separated liquid being discharged from the separator 1 is to be clear and thus have a low turbidity (e.g. "Operational mode B" in Figure 4), the controller 35 concludes in S101 that the separator 1 is operated in "low turbidity mode", in which mode the separator 1 typically will operate the centrifuge bowl 5 at a high rotational speed to effectively separate the two liquid phases. In this example, the controller 35 may conclude in S103 from the operational mode information stored in S102 that this particular mode frequently is performed and that maintenance of components associated with the bowl 5, such as the drive motor 3, the spindle 4a and/or the bottom bearing 22 and the top bearing 21 should be performed within an appropriate time period. In this example, a more detailed maintenance action may be communicated to the operator in S104 via the interface; "Drive motor and spindle, 6000 h; top and bottom bearing, 4000 h" (i.e. "Maintenance action B at time Y").

Finally, in the third example given hereinabove; if sustainability measures in the form of e.g. energy consumption and operating sound level of the separator 1 are taken into account (e.g. "Operational mode B" in Figure 4), the bowl 5 may generally be rotated at a generally low rpm, and the pump 25 is operated at low speed, which typically causes less wear to the separator, which may result in a general or specific maintenance action scheduled less often (i.e. "Maintenance action C at time Z"). Thus, in embodiments, the different maintenance actions indicate different components of the separator to be serviced upon performing the maintenance on the separator 1.

It may further be envisaged that the controller 35 evaluates a combination of different operational modes being performed by the separator 1, and on the basis of this evaluation determines one or more maintenance actions to be performed and appropriate timing(s) for the action(s), for instance "Inlet pump, 3000 h, Drive motor and spindle, 7000 h". Hence, in embodiments, the scheduled maintenance action is different for different operational modes being performed by the separator 1.

As understood, further operational modes and scenarios may be envisaged where generally if the separator 1 is in stand-by mode during long times, maintenance actions are scheduled more seldom, while if the separator 1 is frequently in operation, appropriate maintenance actions must typically be taken more often.

As illustrated in Figure 3, the alert maybe communicated S104 over a wireless interface to a handheld device 40 of the operator 41, such as a smart phone, via which the operator 41 controls the separation process by providing instruction to the controller 35 for selecting a desired operational mode, or via a screen of the control panel (not shown) of the separator 1 via which the separator 1 is controlled.

Subsequently, the operator 41 will perform the maintenance action (e.g. "Inlet pump,") on the separator 1 at the scheduled time. As is understood, the maintenance action being alerted in S104 may further in an embodiment comprise instructions on how to perform the action, such as e.g. "Flush the inlet pump with cleaning fluid A" or "Clean the inlet pump by using cleaning kit B" in order to facilitate the maintenance operation for the operator 41. Thus, the schedule maintenance action alerted in S104 will ultimately cause the operator 41 to perform the maintenance action on the separator 1 at the schedule time in S105.

Advantageously, with this embodiment maintenance of the separator 1 becomes far more flexible as compared to the fixed general-type maintenance actions recommended in the art, since the various operations performed by the operator 1 over time are taken into account upon scheduling the maintenance action(s).

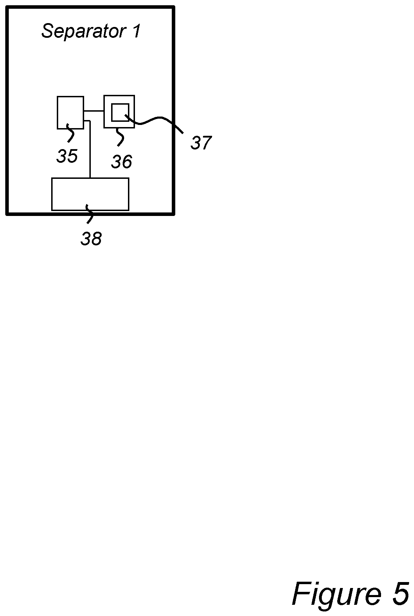

Figure 5 illustrates a separator 1 according to an embodiment, where the steps of the method of providing for maintenance of the separator 1 in practice are performed by previously mentioned controller 35 with which the separator 1 is equipped, the controller 35 being embodied in the form of one or more microprocessors arranged to execute a computer program 37 downloaded to the storage medium 36 associated with the microprocessor, such as a Random Access Memory (RAM), a Flash memory or a hard disk drive. The controller 35 is arranged to cause the separator 1 to carry out the method according to embodiments when the appropriate computer program 37 comprising computer-executable instructions is downloaded to the storage medium 36 and executed by the controller 35. The storage medium 36 may also be a computer program product comprising the computer program 37. Alternatively, the computer program 37 may be transferred to the storage medium 36 by means of a suitable computer program product, such as a Digital Versatile Disc (DVD) or a memory stick. As a further alternative, the computer program 37 may be downloaded to the storage medium 36 over a network. The controller 35 may alternatively be embodied in the form of a digital signal processor (DSP), an application specific integrated circuit (ASIC), a field-programmable gate array (FPGA), a complex programmable logic device (CPLD), etc. The separator 1 may further comprise a communication interface 38 (wired and/or wireless) over which the separator 1 is configured to transmit and receive data.

The aspects of the present disclosure have mainly been described above with reference to a few embodiments and examples thereof. However, as is readily appreciated by a person skilled in the art, other embodiments than the ones disclosed above are equally possible within the scope of the invention, as defined by the appended patent claims.

Thus, while various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following claims.

## Claims

1. A method of providing for maintenance of a separator (1), comprising:
determining (S101) operational modes in which the separator (1) is controlled to operate upon performing separation processes;
storing (S102) information as to which operational modes are performed by the separator;
evaluating (S103) the stored information for scheduling a maintenance action to be performed on the separator (1) based on the performed operational modes; and
alerting (S104) an operator (41) of the separator (1) of the scheduled maintenance action to be performed on the separator (1).

2. The method of claim 1, wherein the alerting (S104) causes the operator (41) to perform the maintenance action according to a scheduled timing of the maintenance action.

3. The method of claims 1 or 2, wherein the scheduled maintenance action is different for different operational modes being performed by the separator (1).

4. The method of claim 3, wherein the different maintenance actions indicate different components of the separator to be serviced upon performing the maintenance on the separator (1).

5. The method of any one of the preceding claims, the scheduled maintenance action comprising instructions to the operator (41) on how to perform the maintenance.

6. The method of any one of the preceding claims, wherein the maintenance action is scheduled with different intervals for different operational modes being performed by the separator (1).

7. The method of any one of the preceding claims, the operational modes being categorized as one or more of a low-maintenance mode, a medium-maintenance mode and a high-maintenance mode, each representing a degree of maintenance being required for the separator (1).

8. The method of any one of the preceding claims, the operational mode being determined based on operational parameters of the separator (1) being controlled upon performing separation processes and/or properties of a fluid mixture being supplied to the separator (1) for separation and/or the external environment in which the separator (1) is arranged .

9. A computer program (37) comprising computer-executable instructions for causing a separator (1) to perform steps recited in any one of claims 1-8 when the computer-executable instructions are executed on a controller (35) included in the separator (1).

10. A computer program product comprising a computer readable medium (36), the computer readable medium having the computer program (37) according to claim 9 embodied thereon.

11. A separator (1) configured to perform a separation process, comprising a processing unit (35) being configured to provide for maintenance of the separator (1), and control the separator (1) to be operative to:
determine (S101) operational modes in which the separator (1) is controlled to operate upon performing separation processes;
store (S102) information as to which operational modes are performed by the separator;
evaluate (S103) the stored information for scheduling a maintenance action to be performed on the separator (1) based on the performed operational modes; and to
alert (S104) an operator (41) of the separator (1) of the scheduled maintenance action to be performed on the separator (1).

12. The separator (1) of claim 11, wherein the alerting (S104) causes the operator (41) to perform the maintenance action according to a scheduled timing of the maintenance action.

13. The separator (1) of claims 11 or 12, wherein the scheduled maintenance action is different for different operational modes being performed by the separator (1).

14. The separator (1) of claim 3, wherein the different maintenance actions indicate different components of the separator to be serviced upon performing the maintenance on the separator (1).

15. The separator (1) of any one of claims 11-14, the scheduled maintenance action comprising instructions to the operator (41) on how to perform the maintenance.
